# EUROPEAN PATENT APPLICATION

(11) **EP 3 489 721 A1**
(43) Date of publication of application: **29.05.2019**
(21) Application number: 17863877.1
(22) Date of filing: 20.06.2017
(51) Int. Cl.: G01S 19/48

(54) **UNMANNED AERIAL VEHICLE FLIGHT CONTROL SYSTEM BASED ON CORS NETWORK DIFFERENTIAL POSITIONING**

(30) Priority: 27.10.2016 CN 201610957088
(71) Applicant: Shanghai Huace Navigation Technology Ltd., Shanghai 201702 (CN)
(72) Inventor: DONG, Shengfei, Shanghai 201799 (CN); WANG, Jiejun, Shanghai 201799 (CN); LI, Caimeng, Shanghai 201799 (CN); XIE, Huazhong, Shanghai 201799 (CN); HE, Wei, Shanghai 201799 (CN)
(74) Representative: Inal, Aysegul Seda
(86) International application number: PCT/CN2017/089129
(87) International publication number: WO 2018/076723

(57) **Abstract**

A flight control system of an unmanned aerial vehicle with differential positioning based on a CORS network includes a MEMS sensing unit (2) for collecting data of angular velocity, linear velocity, air pressure, and magnetic field; a GNSS positioning unit (3) for acquiring GNSS positioning data; a network communication unit (4) for acquiring CORS differential data; an attitude/navigation control unit (5) for controlling the attitude and navigation of the unmanned aerial vehicle, a main control unit (1) for performing data processing, data fusion and system control operations among functional units. The 3G mobile network is used to obtain the differential data from CORS base station and realize an RTK differential positioning of the flight control system, which can satisfy the requirements of centimeter-level positioning accuracy of unmanned aerial vehicles for high-end consumer market and professional surveying and mapping. Compared with the RTK differential positioning solution in which a self-built base station is used and the differential data is transmitted by a radio station, using CORS network to obtain the differential data is faster and more efficient. Also, the deficiencies that the transmission mode of radio station has low precision for long-distance positioning and the communication distance of radio station is limited can be eliminated, and it better accords with the network-based development trend of RTK differential data in the future.

## Description

### Technical Field

The present invention relates to the field of GNSS receiver measurement, in particular to a flight control system of an unmanned aerial vehicle with differential positioning based on CORS network.

### Background

With the development of information technology, unmanned aerial vehicles have entered the field of consumer electronics from the field of military. Especially, there is an explosive growth in the market of rotary-wing unmanned aerial vehicles in recent years. Also, there is an increasing demand for unmanned aerial vehicles in professional fields such as surveying and mapping, aerial photography, etc. Compared with the manually controlled toy unmanned aerial vehicles, the requirements of automaticity and flight accuracy for unmanned aerial vehicles for high-end consumer market or professional surveying and mapping are increasing. As a result, the accurate calculation of position information is of great importance to a flight control system.

At present, GPS single point positioning is usually used in the positioning of unmanned aerial vehicles, and its positioning accuracy is of meter-level. The meter-level positioning accuracy is far from satisfying the requirement of centimeter-level positioning accuracy in professional surveying and mapping. The use of RTK differential flight control system has undoubtedly become the best solution for high-precision positioning at present.. The RTK differential positioning solution used by most of the RTK differential flight control systems available in the market uses a self-built base station and transmits differential data by radio. Such solution requires the support of a high-precision RTK base station on the ground and has the deficiencies of low precision for long-distance positioning and limited communication distance of radio station(s). With the continuous improvement and coverage of the CORS base stations in China, it becomes possible for unmanned aerial vehicles to obtain CORS network differential data, thereby resolving high precision position information through 3G (or 2G/4G) mobile network.

### Summary

The present invention provides a flight control system of an unmanned aerial vehicle with differential positioning based on CORS network, which includes:
a MEMS sensing unit for collecting data of angular velocity, linear velocity, air pressure, and of magnetic fields;
a GNSS positioning unit for acquiring GNSS positioning data;
a network communication unit for acquiring CORS differential data;
an attitude/navigation control unit for controlling the attitude and navigation of the unmanned aerial vehicle;
a main control unit, wherein the main control unit includes a first resolving module, a second resolving module, and a third resolving module;
the first resolving module is connected to the MEMS sensing unit and is used to resolve the attitude, direction and height according to the received data of angular velocity, linear velocity, air pressure, and magnetic field;
the second resolving module is connected to the GNSS positioning unit and the network communication unit and is used to perform RTK position resolving according to the received positioning data and CORS differential data;
the third resolving module is connected to the first solving module and the second solving module and is used to output an attitude/navigation control command to the attitude/navigation control unit based on the data obtained from the resolving of the first resolving module and the second resolving module.

According to the above-mentioned flight control system of an unmanned aerial vehicle with differential positioning based on CORS network, the MEMS sensing unit includes an accelerometer, a gyroscope, an electronic compass, and a barometer.

According to the above-mentioned flight control system of an unmanned aerial vehicle with differential positioning based on CORS network, the network communication unit is a 2G, 3G or 4G communication unit.

According to the above-mentioned flight control system of an unmanned aerial vehicle with differential positioning based on CORS network, the flight control system of an unmanned aerial vehicle further includes a wireless remote control unit connected to the main control unit. The wireless remote control unit is used to receive a remote control instruction sent by an external remote controller and transmit the remote control instruction to the main control unit. The main control unit converts the remote control instruction and sends the converted remote control instruction to the attitude/navigation control unit.

According to the above-mentioned flight control system of an unmanned aerial vehicle with differential positioning based on CORS network, the flight control system of an unmanned aerial vehicle further includes an expandable IO terminal. The expandable IO terminal is connected to a function extension module of the main control unit.

An external expansion device is connected to the flight control system of an unmanned aerial vehicle through the expandable IO terminal.

According to the above-mentioned flight control system of an unmanned aerial vehicle with differential positioning based on CORS network, the flight control system of an unmanned aerial vehicle further includes a monitoring module. The monitoring module is connected to the main control unit.

The monitoring module is provided with a camera.

In the present invention, a 3G mobile network is used to obtain differential data from a CORS base station and realize an RTK differential positioning of the flight control system, so the requirement of centimeter-level positioning accuracy of unmanned aerial vehicles for high-end consumer market and professional surveying and mapping can be satisfied. Compared with the RTK differential positioning solution in which a self-built base station is used and the differential data is transmitted by a radio station, using CORS network to obtain the differential data is faster and more efficient. Also, the deficiencies that the transmission mode of radio station(s) has low precision for long-distance positioning and the limited communication distance of radio station(s) can be eliminated, and it better accords with the network-based development trend of RTK differential data in the future.

### Brief Description of the Drawing

The present invention and characteristics, appearance, and advantages thereof will become clearer by reading the detailed description of the non-limiting embodiments with reference to the accompanying drawing below. In the drawing, identical reference numerals represent the same part. The drawing is not drawn according to specific proportions, the emphasis of the drawing is to illustrate the substance of the present invention.

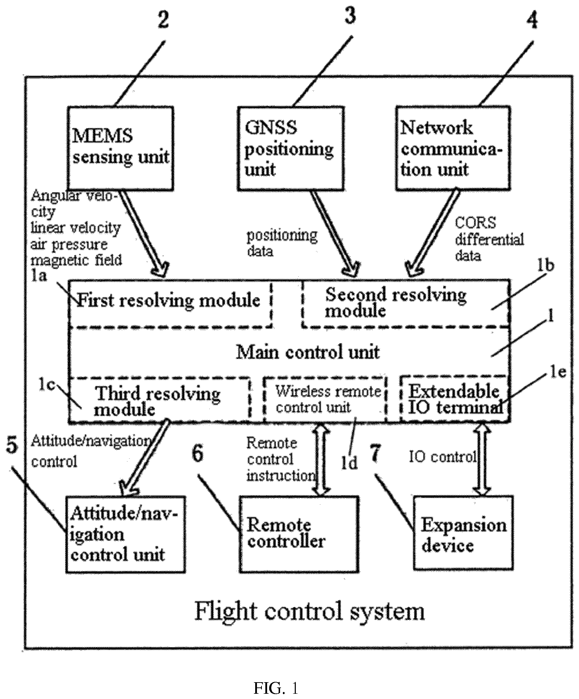

FIG. 1 is a schematic diagram of a flight control system of an unmanned aerial vehicle with differential positioning based on CORS network provided by the present invention.

### Detailed Description

In the following descriptions, numerous specific details are given for a complete understanding of the present invention. However, it is apparent to those skilled in the art that the present invention may be implemented without one or more of these details. In other examples, in order to avoid confusion with the present invention, some technical features known in the art are not described.

For a complete understanding of the present invention, detailed steps and detailed structures will be provided in the following descriptions in order to clearly illustrate the technical solution of the present invention. A preferred embodiment of the present invention is described in detail hereinafter. However, besides these detailed descriptions, the present invention may have other implementations.

The present invention provides a flight control system of an unmanned aerial vehicle with differential positioning based on CORS network, which includes

MEMS sensing unit 2 for collecting data of angular velocity, linear velocity, air pressure and magnetic field;

GNSS positioning unit 3 for acquiring GNSS positioning data, wherein the GNSS positioning unit 3 acquires GNSS positioning data and performs RTK resolution together with the differential data obtained from a CORS network, so as to obtain centimeter-level high-precision positioning information;
network communication unit 4 for realizing the network communication of the unmanned aerial vehicle, logging into a CORS system, and obtaining the differential data; additionally, in practical application, a remote monitoring function can be expanded by using the mobile network as needed;
attitude/navigation control unit 5 for controlling the altitude and navigation of the unmanned aerial vehicle, wherein the navigation control of the unmanned aerial vehicle is realized through controlling the motor of the unmanned aerial vehicle, the revolving speed of the steering engine of the unmanned aerial vehicle, and the angle of rotation of the unmanned aerial vehicle by the navigation control unit;
main control unit 1, wherein main control unit 1 includes first resolving module 1a, second resolving module 1b, and third resolving module 1c.

First resolving module 1a is connected to MEMS sensing unit 2 and is used to resolve the attitude, direction and height according to the received data of angular velocity, linear velocity, air pressure, and magnetic field.

Second resolving module 1b is connected to GNSS positioning unit 3 and network communication unit 4, and is used to perform RTK position resolving according to the received positioning data and CORS differential data.

Third resolving module 1c is connected to first solving module 1a and second solving module 1b and is used to output attitude/navigation control commands to attitude/navigation control unit 5 based on the resolving data of first resolving module 1a and second resolving module 1b.

In an alternative embodiment of the present invention, the MEMS sensing unit includes an accelerometer, a gyroscope, an electronic compass and a barometer.

In an alternative embodiment of the present invention, the network communication unit 4 is a 2G, 3G or 4G communication unit.

In an alternative embodiment of the present invention, the flight control system of the unmanned aerial vehicle further includes wireless remote control unit 1d which is connected to main control unit 1. Wireless remote control unit 1d is used to receive a remote control instruction sent by external remote controller 6 and transmit the remote control instruction to main control unit 1. Main control unit 1 converts the remote control instruction and sends the converted remote control instruction to altitude/navigation control unit 5.

In an alternative embodiment of the present invention, the flight control system of the unmanned aerial vehicle further includes expandable IO terminal 1e. The expandable IO terminal 1e is connected to the function expansion module of main control unit 1. External expansion device 7 such as extended aerial photography and plant protection etc. is connected to the flight control system of the unmanned aerial vehicle through expandable IO terminal 1e.

In an alternative embodiment of the present invention, the flight control system of the unmanned aerial vehicle further includes a monitoring module (not shown). The monitoring module is connected to main control unit 1 and is used to collect monitoring data during the navigation of the unmanned aerial vehicle. The monitoring module is provided with a camera.

In the present invention, a 3G mobile network is used to obtain differential data from a CORS base station and realize an RTK differential positioning of the flight control system, so the requirement of centimeter-level positioning accuracy of unmanned aerial vehicles for high-end consumer market and professional surveying and mapping can be satisfied. Compared with the RTK differential positioning solution in which a self-built base station is used and the differential data is transmitted by a radio station, using CORS network to obtain the differential data is faster and more efficient. Also, the deficiencies that the transmission mode of radio station has low precision for long-distance positioning and the communication distance of radio station is limited can be eliminated, and it better matches the network-based development trend of RTK differential data in the future.

The preferred embodiment of the present invention has been described above. It should be understood that the present invention is not limited to the specific embodiments described above. Devices and structures that are not described in detail herein should be understood as being implemented in a common manner known in the art. Various possible changes and modifications or equivalent embodiments obtained by equivalent substitutions may be derived from the technical solution of the present invention according to the method and technical features recited above without departing from the technical solution of the present invention by any skilled person in the art, which do not have any impact on the essence of the present invention. Therefore, any simple modification, equivalent substitution and modification made based upon the above embodiment according to the technical essence of the present invention without departing from the content of the technical solution of the present invention should still be considered as falling within the scope of the technical solution of the present invention.

## Claims

1. A flight control system of an unmanned aerial vehicle with differential positioning based on a CORS network, comprising:
a MEMS sensing unit for collecting data of angular velocity, linear velocity, air pressure and of magnetic field;
a GNSS positioning unit for acquiring GNSS positioning data;
a network communication unit for acquiring CORS differential data;
an attitude/navigation control unit for controlling an attitude and a navigation of the unmanned aerial vehicle; and
a main control unit; wherein
the main control unit comprises a first resolving module, a second resolving module, and a third resolving module;
the first resolving module is connected to the MEMS sensing unit and is used to resolve attitude, orientation, and height according to received data of angular velocity, linear velocity, air pressure, and of magnetic field;
the second resolving module is connected to the GNSS positioning unit and the network communication unit and is used to perform an RTK position resolution according to received positioning data and received CORS differential data;
the third resolving module is connected to the first solving module and the second solving module and is used to output an attitude/navigation control command to the attitude/navigation control unit based on resolving data of the first resolving module and the second resolving module.

2. The flight control system of the unmanned aerial vehicle with differential positioning based on the CORS network according to claim 1, **characterized in that** the MEMS sensing unit comprises an accelerometer, a gyroscope, an electronic compass, and a barometer.

3. The flight control system of the unmanned aerial vehicle with differential positioning based on the CORS network according to claim 1, **characterized in that** the network communication unit is a 2G, 3G or 4G communication unit.

4. The flight control system of the unmanned aerial vehicle with differential positioning based on the CORS network according to claim 1, **characterized in that** the flight control system of the unmanned aerial vehicle further comprises a wireless remote control unit connected to the main control unit, wherein the wireless remote control unit is used to receive a remote control instruction sent by an external remote controller and transmit the remote control instruction to the main control unit, the main control unit converts the remote control instruction and sends a converted remote control instruction to the attitude/navigation control unit.

5. The flight control system of the unmanned aerial vehicle with differential positioning based on the CORS network according to claim 4, **characterized in that** the flight control system of the unmanned aerial vehicle further comprises an expandable IO terminal, wherein the expandable IO terminal is connected to a function extension module of the main control unit; and
an external expansion device is connected to the flight control system of the unmanned aerial vehicle through the expandable IO terminal.

6. The flight control system of the unmanned aerial vehicle with differential positioning based on the CORS network according to claim 1, **characterized in that** the flight control system of the unmanned aerial vehicle further comprises a monitoring module, wherein the monitoring module is connected to the main control unit; and
the monitoring module is provided with a camera.
